# EUROPÄISCHE PATENTSCHRIFT

(11) **EP 1 562 787 B1**
(45) Veröffentlichungstag und Bekanntmachung des Hinweises auf die Patenterteilung: **19.07.2006**
(21) Anmeldenummer: 03788972.2
(22) Anmeldetag: 29.10.2003
(51) Int. Cl.: B60R 13/06, B62D 27/02

(54) **Abstandsgenauer Zusammenbau eines Dachmoduls mit einer Fahrzeugkarosserie**
Precisely spaced assembly of a roof module and a vehicle body
Assemblage d'un mdule de toit et d'une carosserie de vehicule selon un espacement précis

(30) Priorität: 22.11.2002 DE 10254573
(43) Veröffentlichungstag der Anmeldung: 17.08.2005
(73) Patentinhaber: DaimlerChrysler AG, 70567 Stuttgart (DE)
(72) Erfinder: WENDLER, Roland, 71034 Böblingen (DE); ZIRBS, Thomas, 71263 Weil der Stadt (DE)
(86) Internationale Anmeldenummer: PCT/EP2003/011978
(87) Internationale Veröffentlichungsnummer: WO 2004/048154

(56) Entgegenhaltungen:
- DE-A- 10 109 646
- DE-A- 19 709 016
- US-A1- 2002 005 656

## Beschreibung

Die Erfindung betrifft einen Zusammenbau eines Dachmoduls mit einer Fahrzeugkarosserie, welche mit Hilfe eines Klebeverfahrens miteinander verbunden sind.

Aus der DE 197 09 016 A1 ist ein Dachmodul bekannt, welches unter Zuhilfenahme eines Klebeverfahrens während der Fahrzeugmontage in einen Dachausschnitt der Fahrzeugkarosserie eingesetzt wird. Hierzu ist das Dachmodul randseitig mit einem umlaufenden Flansch versehen, welcher in Zusammenbaulage mit einem Ausschnittsflansch im Dachausschnitt der Fahrzeugkarosserie überlappt und mit diesem über Klebstoffraupen verbunden ist. Das Dachmodul umfaßt eine aus einem metallischen Werkstoff, beispielsweise Stahlblech, geformte Außenschale und eine damit sandwichartig verbundene Innenschale, die aus einem Schaumkunststoff gebildet ist. Die Innenschale ist im Bereich ihrer Auflage auf den Ausschnittsflanschen der Karosserie mit in den Schaumstoff eingeformten Aufnahmenuten für Klebstoff versehen. Diese Aufnahmenuten verhindern ein Austreten des Klebstoffs und sind so dimensioniert, daß ein angepaßter Kanal für die Klebstoffraupe zur Verfügung steht.

Während also bei dem Verbunddach der DE 197 09 016 A1 durch geeignete Formung der Kunststoff-Innenschale ein angepaßter Klebstoffkanal vorgesehen werden kann, ist dies im Regelfall, insbesondere bei Verwendung von Glasdächern, Dachöffnungssystemen und Dachmodulen aus bestimmten metallischen Werkstoffen (z.B. aus Alublech) nicht mehr der Fall, da in diesem Fall eine Einformung von Klebstoffkanälen nicht möglich, nicht wirtschaftlich praktikabel und nicht mit ausreichender Genauigkeit und Reproduzierbarkeit machbar ist. In diesem Fall muß daher eine alternative Ausgestaltung des Verbindungsbereiches von Dachmodul und Dachausschnitt gefunden werden, die sicherstellt, daß der Klebstoff in der gewünschten Lage und Form zwischen der Innenseite des Dachmoduls und der Oberseite der Ausschnittsflansche angeordnet ist. Dabei muß das Dachmodul reproduzierbar in einer solchen Weise mit den Flanschen des Dachausschnitts verbunden werden, daß einerseits eine übermäßige Quetschung der Klebstoffraupe - mit der damit verbundenen Gefahr eines Klebstoffaustritts - verhindert wird. Andererseits muß sichergestellt werden, daß die Klebstoffraupe prozeßsicher den Spalt zwischen der Innenseite des Dachmoduls und der Oberseite der Flansche überspannt, so daß eine dichte Verbindung zwischen Dachmodul und Dachausschnitt gewährleistet ist.

DE10109646 A1 beschreibt einen Dachmodulanbau nach dem Oberbegriff des Anspruchs 1.

Der Erfindung liegt daher die Aufgabe zugrunde, den Zusammenbau eines Dachmoduls, insbesondere eines Glasdachs, mit einem Dachausschnitt einer Fahrzeugkarosserie auf eine solche Weise zu gestalten, daß prozeßsicher eine dichte und verschmutzungsfreie Klebeverbindung zwischen der Innenseite des Dachmoduls und der Oberseite der Ausschnittsflansche sichergestellt wird.

Die Aufgabe wird erfindungsgemäß durch die Merkmale des Kennzeichenden Teils des Anspruchs 1 gelöst.

Danach sind auf dem Dachausschnitt der Karosserie im Bereich der Ausschnittsflansche Abstandshalter vorgesehen, durch welche der Abstand zwischen der dem Ausschnittsflansch zugewandten Innenfläche des Dachmoduls und der dem Dachmodul zugewandten Oberseite des Ausschnittsflansches auf ein vorgegebenes Maß eingestellt wird. Diese Abstandshalter bewirken, daß im Verbindungsbereich zwischen Dachmodul und Ausschnittsflansch ein Spalt mit einer vorgegebenen lichten Höhe vorliegt, die dem Querschnittsprofil der Klebstoffraupe angepaßt ist. Die Spalthöhe ist dabei so dimensioniert, daß einerseits der vom Klebstoff überbrückt wird, andererseits die Klebstoffraupe aber keine übermäßige Quetschung erfährt, so daß eine für die sichere Verbindung zwischen Karosserie und Dachmodul notwendige Mindestdicke des Klebers eingehalten und ein Auspressen von Klebstoff aus dem Verbindungsbereich vermieden wird. Durch die Einstellung des Klebespaltes mit Hilfe der Abstandhalter wird gleichzeitig gewährleistet, daß die Oberseite des Dachmoduls eine vordefinierte Lage gegenüber den Seitenholmen der Karosserie einnimmt, so daß das gewünschte Erscheinungsbild der Dachfläche zur Karosserie erreicht wird.

Die Abstandshalter gewährleisten eine genaue und reproduzierbare (lokale) Einstellung des Spaltes zwischen beliebig geformten Dachmodulen und Ausschnittsflansch. Werden Abstandshalter an mehreren (geeignet gewählten) Stellen entlang des Dachausschnitts der Karosserie vorgesehen, so kann der Spalt umlaufend auf einen gewünschten Wert eingestellt werden. Dies ermöglicht eine verschmutzungsfreie und gleichzeitig reproduzierbare dichte Verbindung des Dachmoduls in der Fahrzeugkarosserie, wenn zwischen Dachmodul und Ausschnittsflanschen eine geschlossene, den Dachausschnitt umlaufende Klebstoffraupe vorgesehen wird.

Vorzugsweise sind die Abstandshalter in einer solchen Weise im Dachausschnitt der Fahrzeugkarosserie angeordnet, daß sie sich auf der dem Innenraum des Dachausschnitts benachbarten Seite der Klebstoffraupe befinden. Dann stützen die Abstandhalter das Dachmodul außerhalb des für die Klebstoffraupe vorgesehenen Fügebereiches, so daß eine umlaufende, durchgängige Klebstoffverbindung zwischen dem umlaufenden Ausschnittsflansch und dem Dachmodul vorgesehen werden kann.

Erfindungsgemäß sind die Abstandshalter durch Einsteckteile gebildet, welche Fixierzungen aufweisen, die in Taschen des Ausschnittsflansches geführt sind. Diese Einsteckteile werden vor dem Einsetzen des Dachmoduls in die hierfür vorgesehenen Taschen eingeschoben. Diese Ausgestaltung hat den Vorteil, daß sie variabel in bezug auf die in die Karosserien zu verbauenden Typen von Dachmodulen ist: So können Dachmodule unterschiedlicher Materialstärke und Materialbeschaffenheit (Festdach mit und ohne Schiebedach, Ganzdachöffnungssystem, Glasdach, ...) unter Verwendung unterschiedlicher, dem jeweiligen Dachmodul angepaßter Einsteckteile in den Dachausschnitt eingebaut werden, ohne daß dazu einer Änderung des Rohbaus (insbesondere der Lage der Ausschnittsflansche gegenüber den Seiten- und Querholmen) notwendig ist: Die auf die jeweilige Ausführungsform des Dachmoduls abgestimmten Einsteckteile stellen sicher, daß der Spalt zwischen Dachmodul und Ausschnittsflansch das gewünschte Maß hat. Vorzugsweise bestehen die Einsteckteile aus Kunststoff oder aus einem beschichteten Metallwerkstoff, um Kontaktkorrosion mit dem Ausschnittsflansch zu vermeiden.

Im folgenden wird ein zusammenbau eines Dachmoduls mit einer Fahrzeugkarosserie in den Zeichnungen näher erläutert; dabei zeigen:
- Fig. 1: eine perspektivische schematische Ansicht einer Karosserie mit einem einzubauenden Dachmodul;
- Fig. 2: eine Detailansicht des Zusammenbaus der Karosserie mit dem Dachmodul in einer Schnittdarstellung
Fig. 2a ... mit ordnungsgemäßem Spalt und
Fig. 2b ... mit einem zu kleinen Spalt zwischen Dachmodul und Ausschnittsflanschen;
- Fig. 3: eine Detailansicht des Zusammenbaus der Karosserie mit dem Dachmoduls mit einem Abstandshalter
Fig. 3a perspektivische Darstellung des Zusammenbaus;
Fig. 3b Schnittdarstellung;
- Fig. 4: zeigt Erfindungsgemäß eine Detailansicht des Zusammenbaus der Karosserie mit dem Dachmoduls mit einem Abstandshalter
Fig. 4a perspektivische Darstellung des Zusammenbaus;
Fig. 4b Detailansicht eines in den Ausschnittsflansch eingeschobenen Einsteckteils;
Fig. 4c Schnittdarstellung des Zusammenbaus.

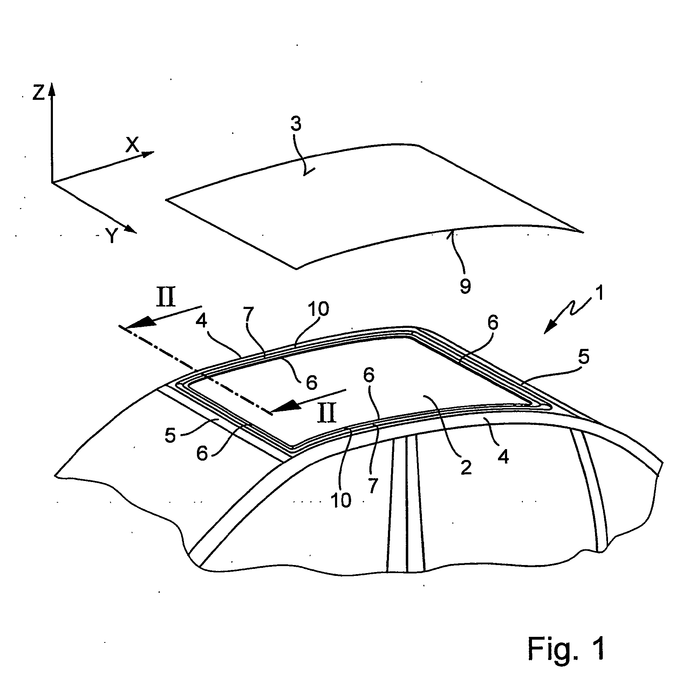

Figur 1 zeigt eine perspektivische Darstellung einer Fahrzeugkarosserie 1 mit einem Dachausschnitt 2, in welchen ein Dachmodul 3 eingebaut werden soll. Der Dachausschnitt 2 wird in Fahrzeugquerrichtung Y durch Seitenholme 4 und in Fahrzeugslängsrichtung X durch einen vorderen und einen hinteren Querholm 5 begrenzt. Der Dachausschnitt 2 ist mit randseitig umlaufenden Ausschnittsflanschen 6 versehen, im Bereich derer das Dachmodul 3 mit der Fahrzeugkarosserie 1 verbunden wird.

Zur Verbindung des Dachmoduls 3 mit den Ausschnittsflanschen.6 wird ein Klebeverfahren eingesetzt: Hierzu wird im Zuge der Dachmontage - wie in Figur 1 schematisch dargestellt - eine Klebstoffraupe 7 auf den Ausschnittsflansch 6 aufgetragen, auf welche anschließend das Dachmodul 3 aufgelegt wird. Die Klebstoffraupe 7 kann ein beliebiges Querschnittsprofil (dreieckig, oval, ...) haben und ist so dimensioniert, daß nach dem Auflegen des Dachmoduls 3 auf den mit der Klebstoffraupe 7 versehenen Dachausschnitt 2 im Fügebereich der Spalt 8 zwischen der Innenseite 9 des Dachmoduls 3 und der Oberseite 10 des Ausschnittflansches 6 von Klebstoff 12 überbrückt wird. Im Ausführungsbeispiel der Figur 1 umläuft die Klebstoffraupe 7 den gesamten Dachausschnitt 2, wodurch eine umlaufende Klebeverbindung zwischen Dachmodul 3 und Fahrzeugkarosserie 1 erzeugt werden soll. Alternativ kann die Klebstoffraupe 7 auch nur abschnittsweise entlang des Ausschnittsflansches 6 vorgesehen werden; in diesem Fall müssen jedoch zusätzliche Abdichtungen vorgesehen werden, um eine dichte Verbindung des Dachmoduls 3 mit der Karosserie 1 zu erreichen. - Alternativ bzw. zusätzlich zu dem in Figur 1 gezeigten Auftrag der Klebstoffraupe 7 auf den Ausschnittsflansch 6 der Karosserie 1 kann die Klebstoffraupe 7 auch auf die Innenseite 9 des Dachmoduls 3 aufgetragen werden.

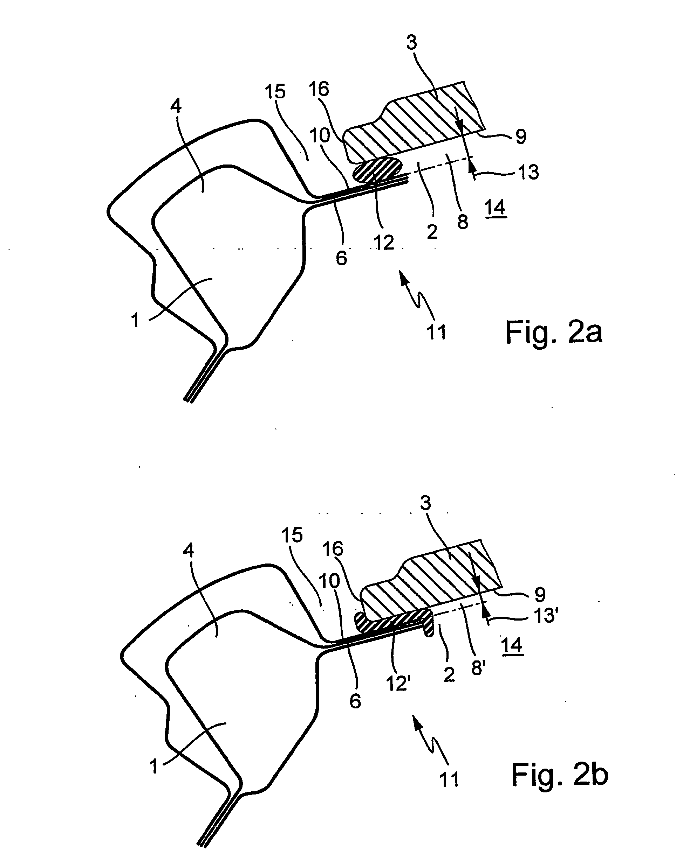

Figur 2a zeigt eine Detailansicht des Zusammenbaus 11 aus Fahrzeugkarosserie 1 und Dachmodul 3 in einer schematischen Schnittdarstellung. Zwischen der dem Ausschnittsflansch 6 zugewandten Innenfläche 9 des Dachmoduls 3 und der dem Dachmodul 3 zugewandten Oberseite 10 des Ausschnittsflanschs 6 liegt eine Klebstoffschicht 12 vor, die durch partielles Zusammendrücken der Klebstoffraupe 7 im Zuge des Einbaus des Dachmoduls 3 entsteht und die den Spalt 8 zwischen dem Ausschnittsflansch 6 und dem Dachmodul 3 überbrückt. Die Spalthöhe 13 legt fest, wie stark die Klebstoffraupe 7 zusammengedrückt wird; in dem in Figur 2a gezeigten Fall ist die Klebstoffraupe 7 auf das gewünschte Maß zusammengedrückt: In diesem Fall ist der Spalt 8 zwischen Dachmodul 3 und Ausschnittsflansch 6 mit Klebstoff 12 aufgefüllt, gleichzeitig ist der Spalt 8 hoch genug, so daß kein Kleberaustritt in den Innenraum 14 der Karosserie 1 oder den zwischen Dachmodulrand 16 und Seitenholm 4 gebildeten Dachgraben 15 zu beobachten ist. Der Dachgraben 15 wird in einem späteren Montageschritt durch einen an den Seitenholm 4 angeclipsten, in Figur 2a nicht gezeigten Zierstab 17 geschlossen. - Im Unterschied zu der in Figur 2a gezeigten ordnungsgemäßen Lage und Pressung des Klebstoffs 12 zeigt Figur 2b einen Fall, in dem das Dachmodul 3 zu tief in den Dachausschnitt 2 eingedrungen ist. In diesen Fällen ist die Höhe 13' des Spalts 8' zu gering, so daß der Klebstoff 12' teilweise aus dem Fügebereich hinausgedrängt wird und in den Innenraum 14 der Karosserie 1 und in den Dachgraben 15 austritt und dort zu Verschmutzungen und Störstellen im weiteren Montageablauf (z.B. bei der Dachzierstabmontage) führt.

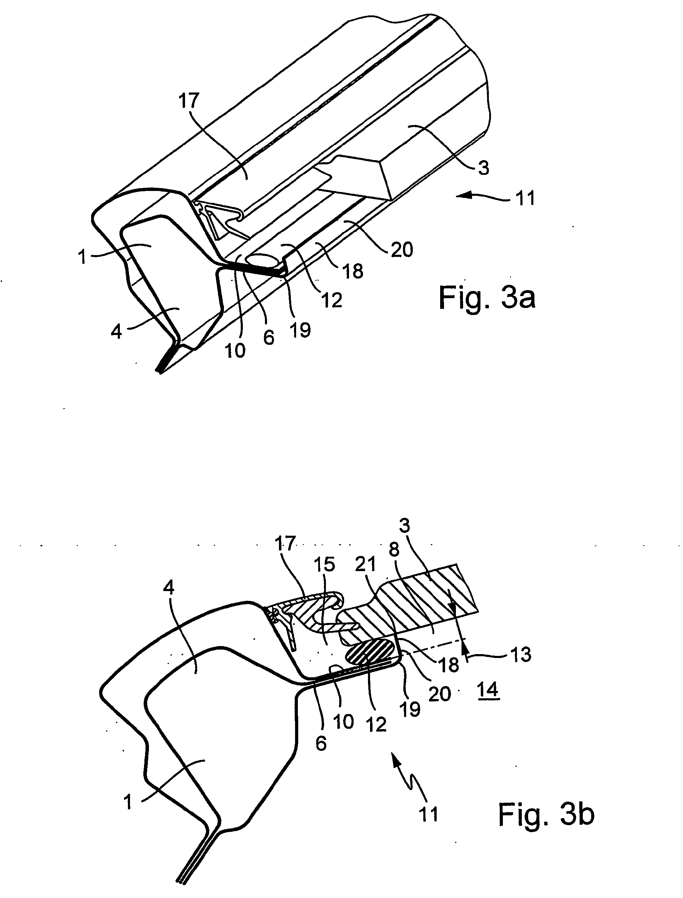

Um einen solchen Kleberaustritt in den Fahrzeuginnenraum 14 oder den Dachgraben 15 zu vermeiden, muß sichergestellt werden, daß der Spalt 8 zwischen Dachmodul 3 und Ausschnittsflansch 6 eine vorgegebene, auf das Querschnittsprofil der Klebstoffraupe 7 abgestellte Höhe 13 hat. Hierzu wird der Ausschnittsflansch 6 mit einem Abstandshalter (bzw. mehreren Abstandshaltern) 18 versehen, welcher die Innenseite 9 des auf den Dachausschnitt 2 gelegten Dachmoduls 3 auf der vorgegebenen Höhe 13 gegenüber der Oberseite 10 des Ausschnittsflansches 6 hält. In der Figuren 3a und 3b ist dieser Abstandshalter 18 durch einen Randbereich 20 eines der Bleche 19 des Ausschnittsflansches 6 gebildet, welches in diesem dem Dachausschnitt 2 benachbarten Randbereich 20 nach oben abgestellt ist. Die Länge des nach oben abgewinkelten Randbereiches 20 ist so gewählt, daß ein auf der äußersten Berandung 21 des Randbereiches 20 aufgelegtes Dachmodul 3 einen Spalt 8 der gewünschten. Höhe 13 mit der Oberseite 10 des Ausschnittsflansches 6 bildet. Der nach oben abgewinkelte Randbereich 20 verhindert somit ein zu tiefes Eindringen des Dachmoduls 3 in den Dachausschnitt 2 und stellt gleichzeitig eine Barriere dar, die das Austreten von Klebstoff 12 in den Innenraum 14 der Karosserie 1 (z.B. bei fehlerhaft positionierter Klebstoffraupe) verhindert. Der nach oben abgewinkelte Randbereich 20 kann durchgängig im gesamten Dachausschnitt 2 vorgesehen sein, oder aber örtlich unterbrochen sein.

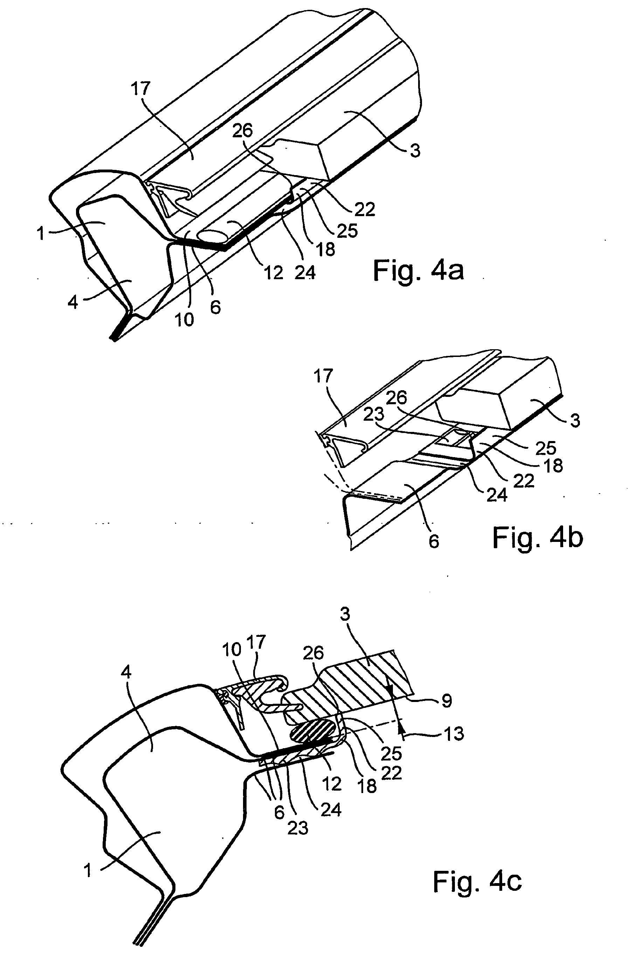

Figuren 4a bis 4c zeigen eine erfindungsgemäße Ausgestaltung des Abstandshalters 18, der hier durch ein Einsteckteil 22 aus einem Kunststoff gebildet ist, das eine Fixierzunge 23 aufweist, welche in eine Tasche 24 im Ausschnittsflansch 6 eingesteckt ist. Das der Fixierzunge 23 gegenüberliegende Ende des Einsteckteils 22 ist als ein Bund 25 ausgebildet, der näherungsweise rechtwinkelig von der Fixierzunge 23 abragt. In Zusammenbaulage des Dachmoduls 3 mit der Fahrzeugkarosserie 1 liegt das Dachmodul 3 auf der Stirnseite 26 des nach oben abragenden Bundes 25 des Einsteckteils 22 auf; die Länge des Bundes 25 ist so bemessen, daß zwischen der Innenseite 9 des Dachmoduls 3 und der Oberseite 10 des Ausschnittsflansches 6 ein Spalt 8 mit der gewünschten lichten Höhe 13 für die Klebstoffschicht 12 vorliegt. Durch Verwendung unterschiedlicher Einsteckteile 22 mit unterschiedlichen Ausformungen und Längen des Bundes 25 kann der Spalt 8 variiert werden. Entlang der Ausschnittsflansche 6 können beliebig viele Taschen 24 zur Aufnahme der Einsteckteile 22 vorgesehen sein. Die Einsteckteile 22 werden zweckmäßigerweise erst kurz vor Einbau des Dachmoduls 3 in die Taschen 24 eingesteckt, wenn feststeht, welche Art von Dachmodul 3 in die betreffende Karosserie 1 eingesetzt werden soll.

Neben den oben beschriebenen Beispielen der Abstandshalter 18 als aufgebogene Flansche 20 (Figuren 3a und 3b) und erfindungsgemäße als Einsteckteile 22 (Figuren 4a bis 4c) sind auch Kombinationen diesen zwischen möglich (so daß beispielsweise im Bereich der Querholme 5 aufgebogene Flansche 20 vorgesehen sind, während im Bereich der Seitenholme 4 Einsteckteile 22 eingeführt werden).

## Patentansprüche

1. Zusammenbau eines Dachmoduls mit einer Fahrzeugkarosserie, welche mit Hilfe eines Klebeverfahrens miteinander verbunden sind,
wobei das Dachmodul mit seinen Außenrändern auf Ausschnittsflanschen in einem Dachausschnitt der Fahrzeugkarosserie aufliegt und mit diesen unter Verwendung mindestens einer Klebstoffraupe fest verbunden ist,
- wobei im Bereich der Ausschnittsflansche (6) mindestens ein Abstandshalter (18,22) vorgesehen ist, durch welchen der Abstand (13) zwischen der dem Ausschnittsflansch (6) zugewandten Innenfläche (9) des Dachmoduls (3) und der dem Dachmodul (3) zugewandten Oberseite (10) des Ausschnittsflansches (6) auf ein vorgegebenes Maß eingestellt ist, **dadurch gekennzeichnet,**
- **dass** der mindestens eine Abstandshalter (18) durch ein Einsteckteil (22) mit einer Fixierzunge (23) gebildet ist, welche in einer Tasche (24) des Ausschnittsflansches (6) geführt ist.

2. Zusammenbau nach Anspruch 1,
**dadurch gekennzeichnet,**
**dass** das Einsteckteil (22) aus einem Kunststoff besteht.

3. Zusammenbau Anspruch 1 oder 2,
**dadurch gekennzeichnet,**
**dass** zwischen dem Dachmodul (3) und den Ausschnittsflanschen (6) mindestens eine geschlossene, den Dachausschnitt (2) umlaufende Klebstoffraupe (7,12) vorgesehen ist.

4. Zusammenbau nach einem der Ansprüche 1 bis 3,
**dadurch gekennzeichnet,**
**dass** der mindestens eine Abstandshalter (18,20,22) auf der dem Innenraum (14) des Dachausschnitts (2) benachbarten Seite der Klebstoffraupe (7,12) angeordnet ist.

## Claims

1. Assembly of a roof module and a vehicle body which are connected to each other with the aid of an adhesive bonding process, the roof module resting with its outer edges on roof-opening flanges in a roof opening of the vehicle body and being connected fixedly to the said roof-opening flanges with the use of at least one adhesive bead,
- with at least one spacer (18, 22) being provided in the region of the roof-opening flanges (6), by means of which the distance (13) between the inner surface (9), facing the roof-opening flange (6), of the roof module (3) and the top side (10), facing the roof module (3), of the roof-opening flange (6) is set to a predetermined size,
**characterized**
- **in that** the at least one spacer (18) is formed by a plug-in part (22) with a fixing tongue (23) which is guided in a pocket (24) of the roof-opening flange (6).

2. Assembly according to Claim 1, **characterized in that** the plug-in part (22) is composed of a plastic.

3. Assembly according to Claim 1 or 2, **characterized in that** at least one closed adhesive bead (7, 12) encircling the roof opening (2) is provided between the roof module (3) and the roof-opening flanges (6).

4. Assembly according to one of Claims 1 to 3,
**characterized in that** the at least one spacer (18, 20, 22) is arranged on that side of the adhesive bead (7, 12) which is adjacent to the interior (14) of the roof opening (2).

## Revendications

1. Assemblage d'un module de toit à une carrosserie de véhicule, lesquels sont connectés l'un à l'autre à l'aide d'un procédé de collage,
le module de toit s'appliquant avec ses bords extérieurs sur des brides de pièce découpée dans une pièce découpée de toit de la carrosserie de véhicule et étant connecté fixement à celle-ci en utilisant au moins un cordon de colle,
- dans la région de la bride de pièce découpée (6), au moins un élément d'espacement (18, 22) étant prévu, lequel permet d'ajuster la distance (13) entre la surface interne (9) du module de toit (3) tournée vers la bride de pièce découpée (6) et le côté supérieur (10) de la bride de pièce découpée (6) tourné vers le module de toit (3) à une dimension prédéfinie,
**caractérisé en ce que**
- l'au moins un élément d'espacement (18) est formé par une pièce enfichable (22) avec une langue de fixation (23) qui est guidée dans une poche (24) de la bride de pièce découpée (6).

2. Assemblage selon la revendication 1,
**caractérisé en ce que**
la partie enfichable (22) se compose de plastique.

3. Assemblage selon la revendication 1 ou 2,
**caractérisé en ce que**
l'on prévoit entre le module de toit (3) et les brides de pièce découpée (6) au moins un cordon de colle (7, 12) fermé entourant la pièce découpée de toit (2).

4. Assemblage selon l'une quelconque des revendications 1 à 3,
**caractérisé en ce que**
l'au moins un élément d'espacement (18, 20, 22) est disposé du côté du cordon de colle (7, 12) voisin de l'espace interne (14) de la pièce découpée de toit (2).
